Europäisches Patentamt

European Patent Office

Office européen des brevets

(19)

(11) Numéro de publication : **0 604 309 A1**

# (12) DEMANDE DE BREVET EUROPEEN

(21) Numéro de dépôt : **93403130.3**

(22) Date de dépôt : **21.12.93**

(51) Int. Cl.⁵ : **G06F 13/16, G11C 8/04**

(30) Priorité : **23.12.92 FR 9215594**

(43) Date de publication de la demande :
**29.06.94 Bulletin 94/26**

(84) Etats contractants désignés :
**BE CH DE ES FR GB IT LI NL SE**

(71) Demandeur : **BULL S.A.**
**Tour BULL,**
**1, place Carpeaux**
**F-92800 Puteaux (FR)**

(72) Inventeur : **Marbot, Roland M.**
**36 Boulevard du Roi**
**F-7800 Versailles (FR)**

(74) Mandataire : **Denis, Hervé et al**
**BULL S.A.**
**Tour BULL Cédex 74**
**PC/TB2803**
**F-92039 Paris La Défense (FR)**

(54) **Système informatique à haut débit, composant de mémoire et contrôleur de mémoire en résultant.**

(57)     Le système informatique (10) comprend un processeur (11) relié à des composants de mémoire (M0-M7) par une interface (13) faite de liaisons série bidirectionnelles (SL0-SL7) ayant chacune une interface de mémoire (16) incorporée au composant de mémoire correspondant et une interface (15) incorporée à un contrôleur de mémoire (17).

FIG.1

EP 0 604 309 A1

L'invention se rapporte aux systèmes informatiques à haut débit, ainsi qu'aux composants de mémoire et aux contrôleurs de mémoire pouvant servir dans ces systèmes informatiques.

Un système informatique est constitué d'un sous-système central pouvant communiquer avec un ou plusieurs sous-systèmes périphériques par l'intermédiaire d'unités d'entrée-sortie. Le sous-système central d'un grand système comprend ordinairement plusieurs processeurs reliés par un bus à une mémoire centrale et aux unités d'entrée-sortie.

Chaque processeur a pour fonction l'exécution des instructions des programmes contenus dans la mémoire centrale. Ces instructions et les données nécessaires à leur exécution sont accessibles par le processeur en utilisant les moyens d'adressage de la mémoire centrale. Cependant, compte tenu des temps d'accès relativement longs dans la mémoire centrale, les processeurs sont habituellement reliés à la mémoire centrale par l'intermédiaire d'une interface appelée antémémoire (cache memory) beaucoup plus rapide mais de contenu limité à un certain nombre d'extraits du contenu de la mémoire centrale. Une antémémoire se compose d'une mémoire de données et d'un répertoire des adresses de ces données. La mémoire de données est faite généralement d'une mémoire vive statique (SRAM) et constitue une mémoire associative à niveaux. Elle est divisée en blocs ayant une même taille prédéterminée, ordinairement de 64 octets à l'heure actuelle, et correspondant chacun à un quantum d'échange avec la mémoire centrale.

Les processeurs de haut de gamme traitent actuellement au mieux environ 200 Mips, soit 200 millions d'instructions par seconde. L'importance du problème lié à ce volume de traitement va ressortir de l'analyse qui suit. Une instruction comprend l'instruction proprement dite qui se réfère à la mémoire centrale au travers de l'antémémoire, et les éventuelles commandes de lecture et d'écriture de données dans la mémoire centrale au travers de l'antémémoire. On estime qu'en moyenne, et comme ordre de grandeur, une instruction sur trois instructions traitées par ce type de processeur inclut une lecture de données et qu'une instruction sur dix instructions traitées inclut une écriture de données. En d'autres termes, une instruction correspond en moyenne à une référence à la mémoire pour l'instruction proprement dite, à environ 0,3 référence à la mémoire pour la lecture et à environ 0,1 référence à la mémoire pour l'écriture, soit en tout environ 1,4 référence à la mémoire. Ces références sont d'abord traitées par l'antémémoire. La probabilité pour que l'instruction ne se trouve pas dans l'antémémoire est estimée à environ 5%, soit $5 . 10^{-2}$. En d'autres termes, il faut une moyenne de l'ordre de cinq accès à la mémoire centrale pour cent accès à l'antémémoire. Dans ce cas, l'antémémoire va lire dans la mémoire centrale le contenu d'un bloc de l'antémémoire, qui comprend ordinairement 64 octets.

Au total, un processeur de 200 Mips requiert de la mémoire centrale un débit D ayant la valeur moyenne

$$D = 200 . 10^6 \times 1{,}4 \times 5 . 10^{-2} \times 64 = 0{,}9 . 10^9$$

La mémoire centrale devra donc avoir un débit de l'ordre du gigaoctet par seconde.

La mémoire centrale est constituée d'éléments de mémoire faits ordinairement chacun d'une puce de mémoire dynamique intégrée DRAM (Dynamic Random Access Memory) de 16 mégabits. Actuellement, le temps d'accès à un bit de cette mémoire est de l'ordre de 100 nanosecondes, ce qui correspond à un débit de 10 mégabits par seconde. Il faut donc 800 puces pour obtenir le débit requis du gigaoctet par seconde de la mémoire centrale. Sachant que chaque puce est faite de 16 mégabits, la mémoire centrale doit comprendre 1,6 gigaoctet pour que le processeur puisse traiter 200 Mips. On comprend que la mise en parallèle de huit cents puces et le prix en résultant constitue un problème majeur à résoudre.

Une solution classique consiste à utiliser comme interface entre le processeur et la mémoire centrale une antémémoire à plusieurs niveaux. L'antémémoire de premier niveau est connectée au processeur et est pour cela généralement appelée antémémoire privée. Elle est en liaison avec plusieurs antémémoires de second niveau constituant en général une antémémoire partagée entre plusieurs antémémoires privées et connectée à la mémoire centrale. Un autre niveau peut y être ajouté. Cependant, cette solution a l'inconvénient de compliquer beaucoup l'interface et la gestion hiérarchique des antémémoires qui la constituent afin de les synchroniser et de conserver la cohérence de leurs répertoires. De plus, une antémémoire est une mémoire vive statique SRAM très rapide, mais aussi très coûteuse. En outre, cette interface ne peut pas couvrir toutes les applications.

Cette solution se trouve donc limitée en complexité et en coût pour des débits élevés tels que ceux présentés précédemment et qui sont en voie de progrès rapide.

De manière classique, une mémoire a une organisation interne constituant une ou plusieurs matrices de points de mémoire d'un bit chacun. Une matrice comprend $n$ lignes et $p$ colonnes, par exemple de $2^{14}$ lignes et $2^{10}$ colonnes pour une mémoire DRAM de 16 mégabits, soit de l'ordre de 16 000 lignes de 1024 colonnes représentatives chacune d'un bit. La matrice a une interface d'entrée-sortie comprenant un décodeur de ligne et un sélecteur de colonne. L'adresse d'un bit dans la matrice est donnée par un signal d'adresse composé d'un signal d'adresse de ligne RAS (Raw Access Strobe) appliqué à l'entrée du décodeur de ligne et d'un signal d'adresse de colonne CAS (Column Access Strobe) appliqué à l'entrée du sélecteur de colonne. En mode de lecture d'un bit de la matrice, le signal d'adresse de ligne RAS sélectionne la ligne de bits incluant le bit demandé. Tous les bits de la ligne sont appliqués aux entrées respectives du sélecteur de colonne, qui fonctionne comme un multiplexeur pour sélectionner le bit demandé en réponse au signal d'adresse de colonne CAS. Inversement, en mode d'écriture d'un bit dans la matrice, les signaux d'adresse de ligne et de colonne désignent la ligne et la colonne qui se coupent au point de mémoire désiré. Par conséquent, dans les deux modes, toute la ligne contenant le bit est validée. En d'autres termes, l'accès à un autre point de mémoire de la même ligne est plus rapide que l'accès à un point de mémoire d'une autre ligne. C'est donc l'interface de la mémoire qui limite la bande passante d'une mémoire DRAM, et non son architecture interne. Cette analyse a conduit à deux solutions récentes pour l'interface entre un processeur et une mémoire centrale.

La première solution de procédé et de dispositif d'interface est présentée dans WO-A-91/16680. Le dispositif d'interface comprend essentiellement un bus de haute performance entre au moins un processeur et au moins une mémoire. Les échanges sur le bus se font par paquets découpés en mots de neuf bits (huit bits de données et un bit de parité). Le bus forme un canal pour ces neuf bits et fonctionne à une fréquence de 250 MHz. La solution proposée profite du fait que toute une ligne de bits est sélectionnée par l'interface pour les stocker dans un registre tampon. Le premier mot est disponible au bout du temps d'accès prédéterminé de la mémoire. Par contre, les mots suivants sont respectivement accédés séquentiellement à une période prédéterminée, de 2 nanosecondes par exemple. A la fréquence d'horloge de 250 MHz, le débit de l'interface est de 500 mégaoctets par seconde. En outre, le registre tampon peut fonctionner comme une antémémoire intégrée au processeur, de sorte qu'un nouvel accès à la même ligne peut se faire en un temps considérablement réduit. Cette solution est donc bien adaptée pour le transfert de blocs de données de grande taille. Elle présente cependant trois inconvénients majeurs.

Le premier inconvénient concerne la mémoire. D'une part, le registre tampon préconisé est une mémoire DRAM de 4,5 mégabits au lieu des 4 mégabits d'une DRAM classique, à cause du neuvième bit (le bit de parité) ajouté à chaque octet de données devant être transféré sur le bus. Cette mémoire est divisée en deux bancs ayant chacun 256 lignes et 1024 colonnes, les lignes et colonnes s'étendant chacune sur une profondeur de neuf bits. En d'autres termes, la taille d'une ligne est de 1024 mots de neuf bits. Le débit de transfert à la période de 2 nanosecondes qui peut être obtenu de cette solution est donc limité par la taille d'une ligne de la mémoire, soit 1024 mots. D'autre part, on a vu que la structure de la mémoire n'est pas une structure classique de DRAM. De plus, cette solution s'appuie sur un protocole spécifique de transfert des informations contenues dans chaque paquet, à savoir les adresses, les données, la nature du transfert (écriture/lecture) et la taille des données à transférer. La logique de commande de la mémoire doit être adaptée au protocole choisi. En outre, l'interface externe de la mémoire requiert une autre organisation pour que les adresses, les données et les commandes transitent toutes par le bus selon ce protocole.

Le second inconvénient est d'ordre topologique. La durée de propagation des signaux sur toute la longueur physique du bus est limitée par la période de son horloge. A la période choisie de 2 nanosecondes, la longueur du bus est limitée à environ dix centimètres. Actuellement, cette longueur permet la connexion maximale de 32 mémoires DRAM. Cette limite est très contraignante. Une extension de la mémoire peut se faire par des modules pourvus chacun de 32 mémoires DRAM connectés sur un bus auxiliaire de même type que le bus principal par l'intermédiaire d'une unité de commande appelée contrôleur de mémoire. Cependant, seulement dix modules peuvent être connectés au bus principal, et la présence de contrôleurs de mémoire complique beaucoup la gestion de l'ensemble de la mémoire. Cet inconvénient se répercute aussi comme une limite à la fréquence d'horloge. En voulant accroître la fréquence d'horloge pour augmenter le débit du bus, on réduit d'autant la longueur physique maximale du bus et le nombre de mémoires tampons et de modules de mémoires.

Le troisième inconvénient est lié au fonctionnement du ou des bus qui constituent le dispositif d'interface. En supposant que le bus soit connecté à 32 mémoires DRAM, une seule d'entre elles peut dialoguer avec le processeur, tandis que les autres restent inactives (standby). Le débit moyen est donc trente deux fois plus petit. Pour atteindre le débit maximal, il faut donc une interface d'autant plus rapide, qui ne peut être faite qu'avec des mémoires DRAM très rapides. Ces mémoires sont sensiblement plus chères que les mémoires classiques et dissipent sensiblement plus de chaleur. Ce problème est encore accru par la présence de modules de mémoires. Par exemple, un seul des dix modules est actif, et dans ce module activé une seule des trente-deux mémoires est activée.

La seconde solution au problème de l'interface entre au moins un processeur et au moins une mémoire a été présentée par le "Institute of Electrical and Electronics Engineers, Inc." dans un document référencé P1596.4DO.11 du 8 janvier 1992 et intitulé "High-Bandwidth Memory Interface Based on SCI Signalling Technology". Cette interface est connue sous l'appellation RamLink. Comme indiqué dans le titre du document, cette interface est basée sur la technologie SCI (Scalable Coherent Interface) qui définit une interconnexion physique d'un grand nombre de multiprocesseurs étroitement liés (*closely-cou-*

*pled* ou *tightly-coupled*) dans le cadre d'un système susceptible d'avoir une mémoire associée à chaque composant incluant un processeur *(scalable system)*. L'interface est faite entre les dispositifs de mémoire et un contrôleur de mémoire par une interconnexion en anneau et constitue une liaison synchrone point à point. La transmission se fait par paquets de trois types. La liaison physique comprend dix lignes pour, respectivement, un signal d'horloge, un signal d'indication (flag) et huit signaux de données. Le débit de transmission est de un octet de données à la période de 2 nanosecondes pour une période d'horloge de 4 nanosecondes, soit un débit de 500 mégabits par seconde. Le contrôleur de mémoire peut être connecté jusqu'à soixante-quatre mémoires. Chaque mémoire peut se comporter comme un contrôleur d'un sous-anneau pouvant inclure aussi jusqu'à soixante-quatre mémoires. Au maximum, un anneau pourvu de soixante-quatre sous-anneaux peut donc inclure 4096 mémoires. Ce dispositif d'interface est donc performant. Cependant, il présente aussi des inconvénients.

L'inconvénient majeur de cette solution est de se restreindre à la configuration en anneau. Bien que l'interface n'utilise pas de bus, elle ne peut aussi activer qu'une seule des mémoires, les autres devant rester inactives (standby). Le débit est donc limité au débit d'une seule liaison entre une des mémoires et le contrôleur principal. En outre, chaque anneau a un temps de latence proportionnel au nombre de ses mémoires. Le débit réel se dégrade donc avec la taille de l'interface. Le protocole d'échange ajoute encore une dégradation constante.

L'invention remédie à ces inconvénients, en présentant une interface à haut débit facilement évolutive, et facile à gérer.

L'invention a pour objet un système informatique comprenant au moins un processeur relié à au moins un composant de mémoire par une interface, caractérisé en ce que l'interface comprend une liaison série bidirectionnelle.

L'invention a aussi pour objet corollaire un composant de mémoire comprenant une matrice de mémoire connectée à un sélecteur de colonne recevant un signal d'adresse de colonne, caractérisé en ce qu'il comporte une interface de mémoire connectée au sélecteur de colonne et comprenant un émetteur et un récepteur d'informations en série.

L'invention a pour autre objet corollaire un contrôleur de mémoire, caractérisé en ce qu'il comprend au moins une interface de contrôleur adaptée à une transmission série bidirectionnelle.

Les caractéristiques et avantages de l'invention ressortiront de la description qui suit, donnée à titre d'exemple préféré et faite en référence aux dessins annexés.

Dans les dessins :

- la figure 1 est une vue schématique d'un premier système informatique conforme à l'invention ;

- la figure 2 est une vue schématique d'un dispositif d'une liaison série mise en oeuvre dans le système informatique représenté sur la figure 1 ;
- les figures 3A et 3B sont des vues schématiques d'un bloc d'information illustrant deux procédés de gestion de la mémoire et de son interface dans le système informatique représenté sur la figure 1 ;
- la figure 4 est une vue synoptique de l'un des composants de mémoire utilisé dans le système informatique représenté sur la figure 1 ;
- la figure 5 est une vue schématique d'un second système informatique conforme à l'invention ; et
- la figure 6 est une vue schématique d'un troisième système informatique conforme à l'invention.

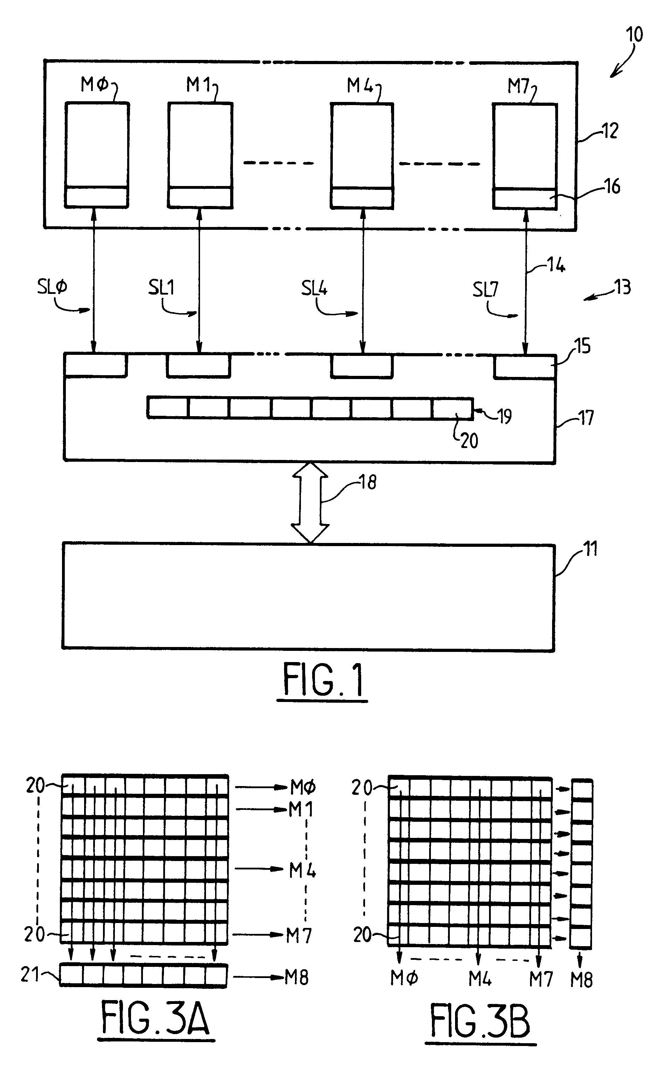

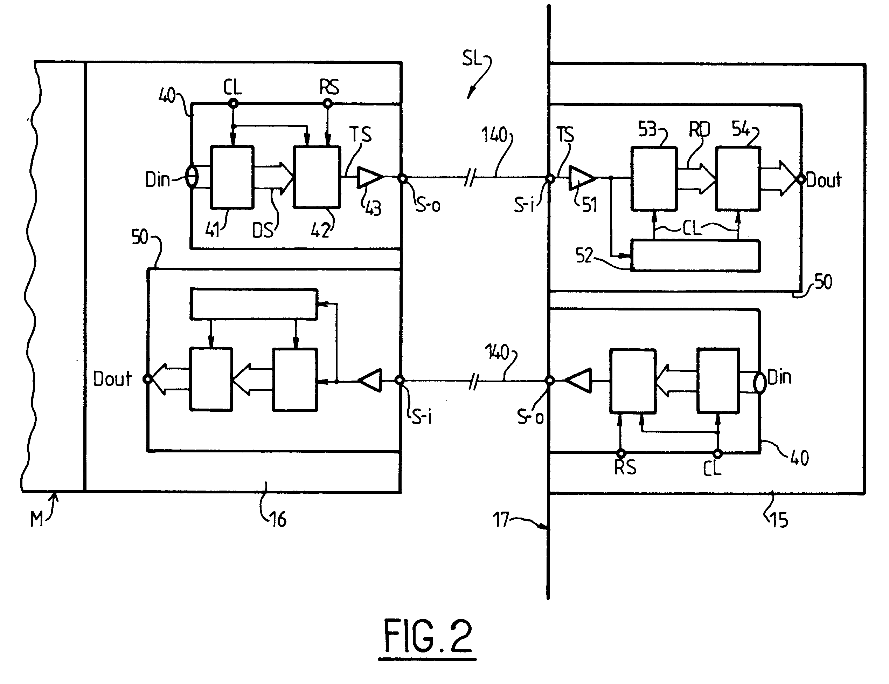

Le système informatique 10 représenté schématiquement sur la figure 1 comprend un processeur 11 et une mémoire 12. La mémoire 12 est faite d'un nombre n, égal à huit dans l'exemple illustré, de mémoires individuelles ou composants de mémoire M (M0, M1,...M4,...M7). Une interface 13 relie le processeur 11 à la mémoire 12.

Dans l'exemple illustré dans la figure 1, l'interface 13 se compose d'un nombre de huit liaisons série bidirectionnelles SL (SL0, SL1,...,SL4,...SL7) reliant respectivement le processeur 11 aux mémoires M0-M7. Chaque liaison série bidirectionnelle SL utilisée dans l'exemple illustré comprend une ligne de communication bidirectionnelle 14 pourvue à ses extrémités respectives d'une interface de contrôleur 15 et d'une interface de mémoire 16 intégrée au composant de mémoire respectif M. Les interfaces de contrôleur 15 sont incorporées dans un dispositif de commande d'entrée-sortie 17 du processeur 11, communément appelé contrôleur de mémoire et relié, dans l'exemple illustré, au processeur 11 par l'intermédiaire d'une liaison parallèle bidirectionnelle 18.

Au lieu d'utiliser une seule ligne de communication bidirectionnelle 14 comme représenté sur la figure 1, il est possible naturellement d'utiliser deux lignes de communication unidirectionnelle. La figure 2 illustre sous forme synoptique une liaison série SL comprenant deux lignes de communication unidirectionnelle 140 et de sens inverses. On trouvera une description détaillée de cette liaison série dans les demandes de brevets de la demanderesse EP-A-0441684, EP-A-0466591, EP-A-0466592, EP-A-0466593. Une réalisation détaillée des circuits à retard pouvant être utilisés pour la réalisation de la liaison illustrée dans la figure 2 est décrite dans les demandes de brevet de la demanderesse EP-A-0493149 et EP-A-0493150.

En bref, dans l'exemple représenté sous forme synoptique sur la figure 2, l'interface de contrôleur 15 et l'interface de mémoire 16 sont identiques et comprennent chacune un émetteur 40 pour émettre sur l'une des deux lignes 140 et un récepteur 50 de l'autre ligne 140. Chaque émetteur 40 comprend une borne d'entrée parallèle de donnée Din, une borne d'entrée d'un signal d'horloge CL, une borne d'entrée d'un signal de remise à zéro RS et une borne de sortie série S-o. Il incorpore : un tampon d'entrée 41 connecté à la borne d'entrée parallèle de donnée Din et à la borne d'entrée du signal d'horloge CL et délivrant un signal de donnée parallèle DS ; un sérialiseur-encodeur 42 recevant le signal d'horloge CL, le signal de remise à zéro RS et le signal de donnée parallèle DS et délivrant un signal de transmission série TS ; et un amplificateur de sortie 43 appliquant le signal de transmission série TS sur la borne de sortie série S-o de l'émetteur. Chaque récepteur 50 présente une borne d'entrée série S-i et une borne de sortie parallèle Dout et comprend : un amplificateur d'entrée 51 mettant en forme le signal de transmission série TS reçu de la ligne 140 ; un récupérateur d'horloge 52 recevant le signal de sortie TS de l'amplificateur d'entrée 51 pour en restituer le signal d'horloge CL ; un désérialiseur-décodeur 53 recevant le signal de sortie TS de l'amplificateur d'entrée 51 et le signal d'horloge restitué CL et délivrant un signal de donnée parallèle RD ; et un tampon 54 recevant le signal de donnée parallèle RD et le signal d'horloge restitué CL pour fournir le signal de sortie parallèle sur la borne de sortie Dout. Chaque ligne 140 peut véhiculer l'adresse d'un bloc d'information. En outre, le signal d'horloge CL peut être crypté dans le signal de transmission série TS et être ainsi transparent, comme cela est décrit dans les exemples de réalisation des documents de référence précités.

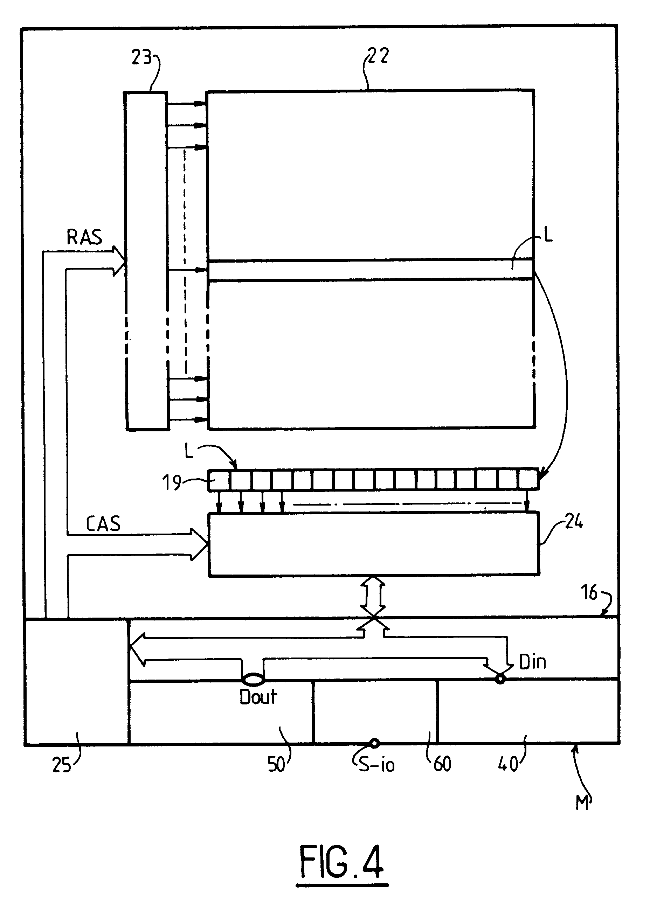

Pour la réalisation d'une communication bidirectionnelle par l'intermédiaire d'une seule ligne comme cela est représenté sur la figure 1, on se référera aux demandes de brevet de la demanderesse EP-A-0504060, EP-A-0504061, EP-A-0504062 et EP-A-0504063. Dans ce cas, l'interface de contrôleur 15 et l'interface de mémoire 16 sont analogues à celles illustrées dans la figure 2 et comportent chacune des moyens additionnels 60 représentés sur la figure 4 pour réaliser une communication bidirectionnelle sur la même ligne 14. De même, la ligne bidirectionnelle 14 peut véhiculer l'adresse d'un bloc d'information, et le signal d'horloge CL peut être crypté dans le signal de transmission série TS.

La gestion de la mémoire 12 et des liaisons série SL par le processeur 11 peut être faite selon plusieurs procédés choisis pour leur adaptation à l'usage particulier du système informatique 10. Par exemple, on suppose que chaque liaison série SL a un débit de 1 gigabit par seconde et que le débit total désiré est de 1 gigaoctet par seconde, soit huit fois plus que le débit d'une liaison série SL. Dans ce cas, l'interface 13 se compose donc de huit liaisons série SL0-SL7. Par conséquent, dans l'interface 13 toutes les liaisons SL0-SL7 fonctionnent simultanément et en parallèle. L'interface 13 peut donc être dimensionnée par rapport au débit moyen de chaque composant de mémoire M, qui peut être grâce à l'invention le débit maximal de chaque liaison série SL actuellement de l'ordre de 1 gigabit par seconde.

On suppose aussi que dans un temps d'accès à la mémoire 11 de 64 nanosecondes on peut stocker un bloc 19 de 64 bits. Chaque bloc 19 est transmis par le processeur 11 au contrôleur de mémoire 17 au travers de la liaison parallèle 18. Selon un premier exemple de procédé de gestion de la mémoire 12 et de son interface 13, les informations sont réparties par le contrôleur 17 de façon à transmettre chaque bloc 19 successivement à chacune des huit liaisons série SL0-SL7.

Les figures 3A et 3B sont des vues schématiques d'un bloc 19 organisé de façon à illustrer deux autres exemples possibles de procédé de gestion de la mémoire 11 et de l'interface 13 ayant les caractéristiques qui viennent d'être données. Ces exemples font avantageusement intervenir un neuvième composant de mémoire M8 non représenté sur la figure 1, mais qui serait connecté de la même façon que les autres composants de mémoire M0-M7 par l'intermédiaire d'une neuvième liaison série bidirectionnelle SL8. Le composant de mémoire M8 sert de mémoire de remplacement d'un composant de mémoire défaillant dans le groupe des huit composants M0-M7 de l'exemple illustré. L'utilisation de la neuvième mémoire M8 est décrite dans le document EP-A-0373043.

Selon le premier exemple représenté sur la figure 3A, le bloc 19 de 64 bits est divisé en huit octets 20 que le contrôleur de mémoire 17 transmet aux huit composants de mémoire M0-M7 par l'intermédiaire des huit liaisons respectives SL0-SL7, comme illustré schématiquement dans la figure 3A par des flèches horizontales. En outre, un octet de parité 21 est ajouté au bloc 19. L'octet de parité 21 est obtenu par l'analyse de la parité des premiers bits des octets 20, puis par l'analyse de la parité des seconds bits, puis par l'analyse itérative de la parité jusqu'aux huitièmes et derniers bits des octets 20. L'analyse de parité est symbolisée dans la figure 3 par des traits verticaux fléchés vers l'octet de parité 21. L'octet de parité 21 est transmis au neuvième composant de mémoire M8 par l'intermédiaire d'une liaison série correspondante SL8. On comprend que la défaillance de l'un des huit composants de mémoire M0-M7 ou de l'une des huit liaisons série SL0-SL7 n'entraîne pas une perte de l'information contenue dans la mémoire défaillante. En effet, l'usage des octets de parité 21 dans le neuvième composant de mémoire M8 permet de reconstituer l'information qui était contenue dans le composant défaillant. Un autre avantage de l'usage du neuvième composant est de permettre la déconnexion sous tension du composant défaillant pour le réparer et de faciliter considérablement la maintenance de la mémoire 12 et de son interface 13.

La figure 3B est une vue du bloc 19 similaire à celle de la figure 3A et illustrant un autre exemple de procédé de gestion de la mémoire 12 et de son interface 13. Selon ce procédé, l'octet formé des premiers bits des huit octets 20 est transmis au premier composant de mémoire à travers la première liaison série SL0, l'octet formé des seconds bits des huit octets 20 est transmis au second composant de mémoire M1, cela continuant itérativement jusqu'au huitième octet formé des derniers bits des huit octets 20 et transmis au huitième composant de mémoire M7, comme cela est représenté sur la figure 3B par des traits verticaux fléchés. L'octet de parité 21 est formé des huit bits de parité des huit octets 20 et est transmis au neuvième composant de mémoire M8 par l'intermédiaire de la neuvième liaison série bidirectionnelle SL8.

La figure 4 est une vue synoptique d'un composant de mémoire M de la mémoire 12 conforme à l'invention. Chaque composant de mémoire M est fait de manière classique d'une matrice de mémoire 22. Chaque point de la matrice 22 est affecté au stockage d'un bit. L'exemple illustré est celui indiqué dans l'introduction de la présente demande, selon lequel le composant de mémoire M est une mémoire DRAM de 16 mégabits, faite d'une matrice de $2^{14}$ lignes et $2^{10}$ (1024) colonnes. La matrice de mémoire 22 est connectée à un décodeur de ligne 23 recevant un signal d'adresse de ligne RAS. Le décodeur de ligne 23 sélectionne ainsi dans la matrice 22 la ligne L composée de 1024 bits et ayant l'adresse désignée par le signal RAS. La matrice de mémoire 22 est aussi connectée à un sélecteur de colonne 24 recevant un signal d'adresse de colonne CAS et fonctionnant comme un multiplexeur. La ligne d'information L sélectionnée est entrée dans le sélecteur de colonne 24 comme illustré schématiquement par une flèche dans la figure 4. Parmi les 1024 bits de la ligne L, le sélecteur de colonne 24 d'une mémoire classique sélectionne le bit placé à la colonne désignée par le signal CAS. Cette sélection a lieu à chaque cycle d'adressage de mémoire, c'est-à-dire à chaque accès à la mémoire. Dans ce cas classique de sélection d'un seul bit, l'adressage exige l'emploi de 24 bits. Dans l'exemple précité du procédé conforme à l'invention, on a vu que les bits pouvaient entrer ou sortir du composant de mémoire M par blocs 19 de 64 bits. Par conséquent, la ligne L est dans ce cas partagée en seize blocs 19 de 64 bits et le sélecteur 24 a seulement à sélectionner à chaque cycle d'adressage de mémoire le bloc 19 ayant l'adresse désignée par le signal CAS utilisé dans le composant de mémoire M conforme à l'invention. Le sélecteur 24 d'un composant de mémoire M conforme à l'invention peut donc être plus simple, et le signal d'adressage de colonne CAS ne nécessite plus que 18 bits au lieu de 24 dans l'exemple précité. Le bloc 19 sélectionné est appliqué à l'interface de mémoire 16 de la liaison série SL, comme cela est aussi représenté sur les figures 1 et 2. Dans l'exemple représenté sur la figure 4, l'interface de mémoire 16 comprend un émetteur 40 et un récepteur 50 comme illustré dans la figure 2, ainsi qu'un dispositif de commande de transmission bidirectionnelle 60 reliant l'émetteur 40 et le récepteur 50 à la borne d'entrée-sortie S-io connectée à la seule ligne de transmission 14 de la liaison série SL. La borne d'entrée Din de l'émetteur 40 et la borne de sortie Dout du récepteur 50 sont connectées au sélecteur de colonne 24. En supposant que dans l'exemple illustré qu'un signal d'adresse est incorporé aux informations transmises par la liaison série SL, l'interface de mémoire 16 comporte un générateur d'adresse 25 connecté aux bornes Din et Dout de l'émetteur 40 et du récepteur 50. Le générateur d'adresse 25 extrait du signal d'adresse les signaux RAS et CAS appliqués respectivement au décodeur de ligne 23 et au sélecteur de colonne 24 pour l'écriture et la lecture de blocs 19 dans la matrice de mémoire 22. L'écriture dans un composant de mémoire M conforme à l'invention d'un bloc 19 issu du récepteur 50 de l'interface de mémoire 16 procède du même procédé décrit précédemment, mais appliqué en sens inverse. Il est clair cependant que le signal d'adresse pourrait être transmis par une autre ligne que celle(s) constituant la liaison série SL. Dans ce cas, le générateur d'adresse 25 serait directement connecté à cette autre ligne pour produire les signaux d'adresse RAS et CAS.

Un autre avantage important de l'invention réside dans la réalisation matérielle des composants de mémoire M. Chaque composant peut n'avoir que quatre bornes d'entrée-sortie qui, dans l'exemple illustré dans la figure 2, sont la borne d'entrée série S-i (serial in), la borne sortie série S-o (serial out), et deux bornes d'alimentation ( par exemple $V_{dd}$ et $V_{ss}$ pour des composants de technologie à effet de champ de type MOS). Et ce nombre peut être réduit à trois dans l'exemple du composant de mémoire représenté sur la figure 4 qui n'utilise qu'une seule borne S-io pour l'entrée-sortie du signal de transmission série sur une seule ligne 14. Par conséquent, le surcoût lié à l'addition de l'interface de mémoire 16 dans chaque composant M peut être minime comparativement au gain apporté par une encapsulation facile du composant de mémoire. Leurs prix pourrait ainsi baisser, tout en offrant des meilleures performances de débit et de bande passante utile.

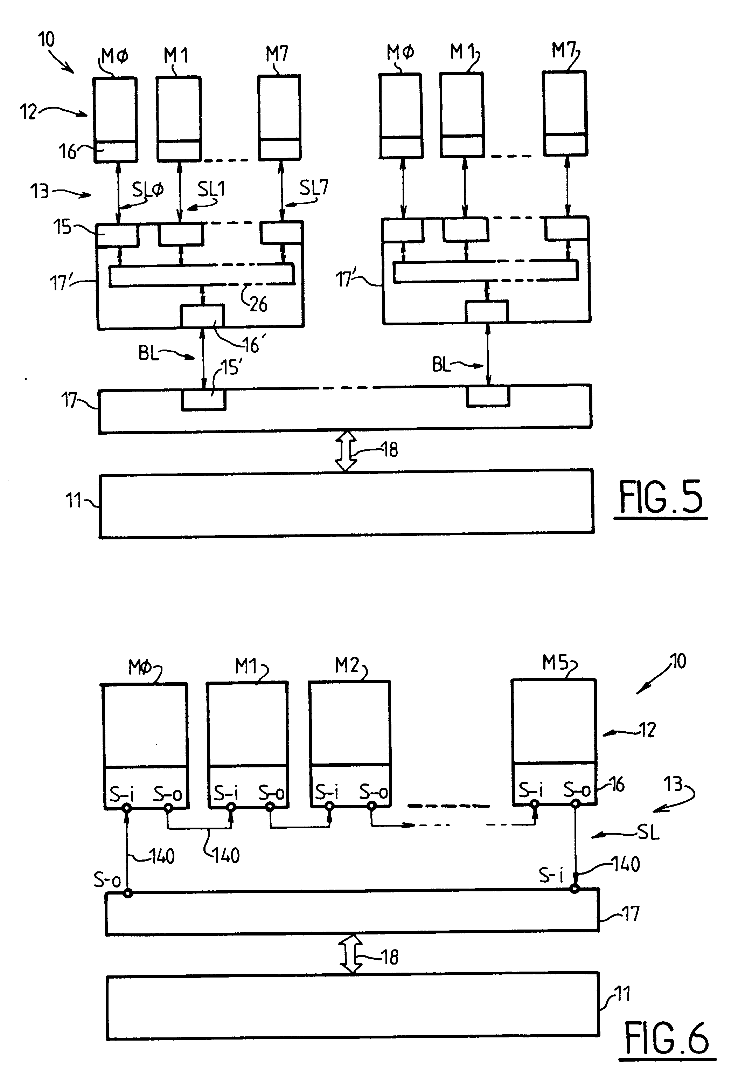

La figure 5 illustre schématiquement une variante de réalisation d'un système informatique 10 conforme à l'invention. Cette variante correspond à l'extension en profondeur classique de la mémoire 12 selon une hiérarchie utilisant le contrôleur de mémoire 17 comme contrôleur principal (de premier niveau) et des contrôleurs de mémoire 17' comme contrôleurs de mémoire secondaires. Chaque contrôleur secondaire 17' est relié à un nombre de composants de mémoire M constituant la mémoire 12. Le nombre de composants de mémoire connectés à un contrôleur secondaire 17' est déterminé par le débit désiré, huit composants M0-M7 dans l'exemple illustré. Les composants de mémoire sont reliés au contrôleur secondaire correspondant 17' par l'intermédiaire de l'interface 13 composée de liaisons série bidirectionnelles respectives SL0-SL7. Chaque liaison série présente comme précédemment une interface de contrôleur 15 incorporée dans un contrôleur secondaire 17' et une interface de mémoire 16 incorporée dans un des composants de mémoire. Les contrôleurs secondaires 17' sont aussi connectés au contrôleur principal 17 par des liaisons bidirectionnelles BL. Les liaisons BL utilisées sont avantageusement des liaisons série ayant une interface de contrôleur principal 15' et une interface de contrôleur secondaire 16'. Chaque contrôleur secondaire 17' inclut en outre un sélecteur 26 reliant l'interface de contrôleur secondaire 16' aux interfaces de contrôleur 15 des liaisons série SL. En supposant que l'information en série reçue de l'interface de contrôleur secondaire 16' incorpore un signal d'adresse, le récepteur 50 de l'interface 16' envoie l'information désérialisée au sélecteur 26, qui restitue et analyse le signal d'adresse pour savoir à quel composant de mémoire M est destiné l'information et l'envoie à l'interface de contrôleur 15 correspondante. Dans cette interface 15 l'information est resérialisée et envoyée au composant de mémoire M concerné. Le sélecteur 26 comprend donc un analyseur de signal d'adresse et un dispositif d'aiguillage. On comprend que le sélecteur 26 pourrait recevoir directement le signal d'adresse à partir du contrôleur principal 17 par l'intermédiaire d'une liaison d'adressage indépendante des liaisons BL. En sens inverse, le signal reçu d'un composant de mémoire M par l'interface de contrôleur 15 n'a pas à être désérialisé et analysé si le contrôleur secondaire n'est connecté qu'à un seul processeur 11. Cependant, il le serait si le contrôleur secondaire 17' était connecté à plusieurs processeurs. On comprend aussi que les liaisons bidirectionnelles BL peuvent être aussi remplacées par un bus puisqu'elles n'ont pas à répondre au même problème que les liaisons série SL de l'interface 13. Le système informatique 10 représenté sur la figure 5 a ainsi une structure en étoile. Cette structure offre l'avantage de minimiser le temps de latence du système informatique 10, au prix cependant de l'utilisation des contrôleurs secondaires 17'.

La figure 6 illustre une autre variante d'un système informatique 10 conforme à l'invention. Selon cette variante, le système a une structure en anneau. Dans l'exemple représenté sur la figure 6, un nombre m choisi égal à 6 de composants de mémoire M0-M5 sont connectés en série dans une boucle entre la borne d'entrée série S-i et la borne de sortie série S-o du contrôleur de mémoire 17 connecté au processeur 11 comme dans l'exemple illustré dans la figure 1. De même, la connexion en série des composants de mémoire M est faite par l'intermédiaire de leur borne d'entrée série S-i et leur borne de sortie série S-o par l'intermédiaire de lignes unidirectionnelles 140 comme dans l'exemple représenté sur la figure 2. Ainsi, une adresse émise du contrôleur de mémoire 17 doit traverser successivement les composants de mémoire de la boucle pour être arrêtée par celui concerné par cette adresse, le composant M2 par exemple. La donnée ayant cette adresse est fournie par ce composant M2 et traverse successivement les autres composants de mémoire M3, M4 et M5 de la boucle pour arriver sur la borne d'entrée série S-i du contrôleur 17. Par conséquent, on peut dire que dans la boucle on a encore une liaison série bidirectionnelle qui, dans l'exemple précédent, comprend : une liaison série aller qui part de la borne de sortie S-o du contrôleur 17 et qui comprend les trois lignes unidirectionnelles 140 reliant successivement le contrôleur 17 au composant de mémoire M2 à travers les interfaces de mémoire 16 des composants de mémoire M0 et M1 ; et une liaison série retour qui part de la borne de sortie série S-o du composant de mémoire M2 et qui comprend les quatre lignes unidirectionnelles 140 reliant le composant de mémoire M2 au contrôleur 17 à travers les interfaces de mémoire 16 des composants de mémoire M3, M4 et M5. En d'autres termes, la liaison série bidirectionnelle SL reliant le processeur 11 au composant de mémoire M2 forme une boucle incluant d'autres composants de mémoire connectés en série dans la boucle. La boucle a donc un débit correspondant à celui des lignes de la liaison série SL qui constitue la boucle. En l'absence des autres composants de mémoire, on obtient la liaison SL2 reliant le contrôleur de mémoire 17 au composant de mémoire M2 dans le système représenté sur la figure 1. On comprend que dans l'exemple du système informatique représenté sur la figure 6 la mémoire 12 est faite des six composants de mémoire M0-M5 et que son interface 13 avec le processeur 11 inclut la liaison série bidirectionnelle SL faite des lignes unidirectionnelles 140 formant une boucle sur le contrôleur de mémoire 17. L'avantage de la boucle est donc de pouvoir ajuster le nombre m de composants de mémoire à la capacité de mémoire désirée.

Plus généralement, le système informatique 10 représenté sur la figure 6 a l'avantage de supprimer l'emploi des contrôleurs de mémoire secondaires 17' utilisés dans le système informatique 10 représenté sur la figure 5. Il permet aussi de modifier la boucle en y ajoutant ou en y retranchant des composants de mémoire et offre donc une grande souplesse d'utilisation, contrairement à l'emploi de contrôleurs de mémoire secondaires. Néanmoins, ce système présente un temps de latence proportionnel au nombre de composants de mémoire dans la boucle. Par conséquent, l'addition de composants de mémoire dans la boucle augmente le temps de latence du système. Ce système sera donc utile s'il s'adapte aux exigences prédéterminées du temps de latence dans une application particulière.

Bien entendu, on peut concevoir un système informatique 10 mixte, incluant par exemple une ou plusieurs boucles de mémoire connectées au contrôleur de mémoire 17 et servant à des applications supportant des temps de latence élevés et un ou plusieurs contrôleurs secondaires 17' pour des applications exigeant de très bas temps de latence. De même, il est clair que la hiérarchie de contrôleurs de mémoire peut être augmentée. Dans ce cas, bien que l'utilisation de boucles peut supprimer un étage de contrôleur de mémoire, il est clair que des boucles peuvent être aussi connectées à des contrôleurs autres que le contrôleur de mémoire 17.

D'une manière générale, les exemples qui viennent d'être décrits mettent bien relief que l'invention a pour objet un système informatique 10 comprenant au moins un processeur 11 relié à au moins un composant de mémoire M par une interface 13. En référence à l'exemple de la figure 1, le système informatique 10 comprend plusieurs composants de mémoire M0-M7 connectés à un contrôleur de mémoire 17 par l'intermédiaire de liaisons série bidirectionnelles parallèles SL0-SL7 ayant chacune un débit maximal prédéterminé (1 gigabit par seconde) et dont la somme des débits correspond à un débit maximal désiré (1 mégaoctet par seconde). Il est donc clair qu'un seul composant M pourrait être utilisé si sa liaison série bidirectionnelle SL avait un débit suffisant. Par conséquent, un système informatique conforme à l'invention peut simplement être caractérisé par le fait que l'interface 13 comprend une liaison série bidirectionnelle SL. On a vu en référence à la figure 2 que la liaison série bidirectionnelle SL a avantageusement une interface de mémoire 16 incorporée au composant de mémoire M et comprenant un émetteur 40 et un récepteur 50. Cependant, il est clair que l'interface de mémoire 16 peut être séparée du composant de mémoire M et que par exemple une pluralité d'interfaces de mémoire 16 soient réunies sur un même composant séparé des composants de mémoire M. Il ressort des figures 2 et 6 que la liaison série bidirectionnelle SL est faite d'au moins deux lignes de transmission unidirectionnelle 140 en sens inverse. Cependant, il ressort des figures 1 et 5 que la liaison série bidirectionnelle SL peut être simplement faite d'une ligne de transmission 14. Naturellement, le contrôleur de mémoire 17 gère la répartition des informations entre les liaisons série SL0-SL7. Trois procédés de gestion ont servi d'exemples, dont deux décrits en référence aux figures 3A et 3B. Il est clair aussi que l'invention peut s'appliquer à tout système informatique de haut débit, monoprocesseur ou multiprocesseur, et qu'elle est plus particulièrement adaptée aux systèmes informatiques multiprocesseurs.

Il ressort de la figure 5 que la liaison série bidirectionnelle SL entre un composant de mémoire M et le processeur 11 forme une boucle incluant d'autres composants de mémoire connectés en série dans la boucle. Dans la figure 5 comme dans le cas où dans la figure 1 un seul composant de mémoire serait utilisé, le contrôleur de mémoire 17 est simplement fait de l'interface de contrôleur 15 de la liaison série SL. Dans ce cas, comme dans d'autres cas où le contrôleur de mémoire 17 aurait une structure simple, il pourrait être intégré au processeur 11.

Dans les exemples décrits, les informations transmises par une liaison série bidirectionnelle SL comprennent des données et des adresses. On a vu cependant que les adresses pourraient être transmises séparément des liaisons série SL, mais qu'il était préférable de les ajouter aux données. Il ressort aussi de la figure 5 que les liaisons bidirectionnelles entre des contrôleurs de mémoire de niveaux hiérarchiques différents peuvent être des liaisons de bus, et de préférence des liaisons série.

Il en résulte que l'invention a aussi pour objet un composant de mémoire M comprenant une matrice de mémoire 22 connectée à un sélecteur de colonne 24 recevant un signal d'adresse de colonne CAS, et une interface de mémoire 16 connectée au sélecteur de colonne et comprenant un émetteur 40 et un récepteur 50 d'informations en série. Il ressort des figures 2 et 6 que l'émetteur et le récepteur sont affectés à deux lignes respectives de transmission unidirectionnelle 140 d'une liaison série bidirectionnelle. Cependant, dans les figures 1, 4 et 5 l'émetteur et le récepteur sont connectés à un dispositif de commande de transmission bidirectionnelle sur une ligne 14 de transmission série bidirectionnelle. On a vu aussi en référence à la figure 4 que le sélecteur de colonne 24 est adapté à l'écriture-lecture de blocs 19 prédéterminés de bits dans une ligne L de la matrice 22 pendant un cycle d'adressage de mémoire, c'est-à-dire pendant le temps d'un accès au composant de mémoire M. Il est clair que d'une manière générale chaque bloc peut être d'une longueur prédéterminée très variable. Dans les limites extrêmes, la longueur peut aller théoriquement de deux bits à l'ensemble des bits de la ligne L, auquel cas il n'y aurait plus qu'un seul bloc formé de la ligne L. On a vu aussi que l'interface de mémoire 16 représentée sur la figure 4 comprend un générateur d'adresse 25 pour fournir le signal d'adresse de ligne RAS et le signal d'adresse de colonne CAS, à partir du signal de transmission série TS (figure 2) ou, en variante, à partir de moyens indépendants de la liaison série bidirectionnelle SL.

Il résulte aussi d'un système informatique 10 conforme à l'invention que l'invention a aussi pour objet un contrôleur de mémoire 17 comprenant une interface de contrôleur 15 adaptée à une liaison série bidirectionnelle. C'est par exemple le cas du contrôleur de mémoire 17 de la figure 6 ou celui de la figure 1 s'il n'y avait qu'un seul composant de mémoire M et une seule liaison série SL. Il ressort de la figure 5 que le contrôleur de mémoire secondaire 17', et d'une manière générale que tout contrôleur de mémoire de niveau hiérarchique quelconque, peut comprendre au moins deux interfaces de contrôleur 15 en liaison avec deux liaisons série bidirectionnelles SL. En effet, l'interface de contrôleur secondaire 16' peut être en liaison avec un bus au lieu d'une liaison série. Quand il existe au moins deux interfaces de contrôleur 15, le contrôleur de mémoire secondaire 17' comprend des moyens de sélection 26 comprenant des moyens d'analyse de signal d'adresse et des moyens d'aiguillage non illustrés. Le signal d'adresse peut provenir d'une liaison série bidirectionnelle SL, BL ou d'une liaison séparée.

## Revendications

1. Système informatique (10) comprenant au moins un processeur (11) relié à au moins un composant de mémoire (M) par une interface (13), caractérisé en ce que l'interface comprend une liaison série bidirectionnelle (SL).

2. Système selon la revendication 1, caractérisé en ce que la liaison série bidirectionnelle (SL) a une interface de mémoire (16) incorporée au composant de mémoire (M) et comprenant un émetteur (40) et un récepteur (50).

3. Système selon la revendication 1 ou 2, caractérisé en ce que la liaison série bidirectionelle (SL) est faite d'une ligne de transmission bidirectionnelle (14) ou d'au moins deux lignes de transmission unidirectionnelle (140) en sens inverse.

4. Système selon l'une des revendications 1 à 3, caractérisé en ce que les informations transmises par la liaison série bidirectionnelle comprennent des données et de préférence des adresses.

5. Système selon l'une des revendications 1 à 4, caractérisé en ce que la liaison série bidirectionnelle forme une boucle incluant d'autres composants de mémoire connectés en série.

6. Système selon l'une des revendications 1 à 5, caractérisé en ce qu'il comprend des composants de mémoire (M0-M7) connectés à un contrôleur de mémoire (17, 17') par l'intermédiaire de liaisons série bidirectionnelles parallèles (SL0-SL7)

ayant chacune un débit maximal prédéterminé et dont la somme des débits correspond sensiblement à un débit maximal désiré.

7. Composant de mémoire (M) comprenant une matrice de mémoire (22) connectée à un sélecteur de colonne (24) recevant un signal d'adresse de colonne (CAS), caractérisé en ce qu'il comporte une interface de mémoire (16) connectée au sélecteur de colonne et comprenant un émetteur (40) et un récepteur (50) d'informations en série.

8. Composant de mémoire selon la revendication 7, caractérisé en ce que le sélecteur de colonne est adapté à l'écriture-lecture d'un bloc (19) prédéterminé de bits d'une ligne (L) de la matrice de mémoire (22) pendant un cycle d'adressage de mémoire.

9. Composant de mémoire selon la revendication 7 ou 8, caractérisé en ce que l'interface de mémoire comprend un générateur d'adresse (25) pour fournir le signal d'adresse de colonne.

10. Contrôleur de mémoire (17), caractérisé en ce qu'il comprend au moins une interface de contrôleur (15) adaptée à une transmission série bidirectionnelle.

11. Contrôleur de mémoire (17'), selon la revendication 10, caractérisé en ce qu'il comprend au moins deux interfaces de contrôleur adaptées chacune à une transmission série bidirectionnelle, et des moyens de sélection (26) comprenant des moyens d'analyse de signal d'adresse et des moyens d'aiguillage.

FIG.1

FIG.3A

FIG.3B

FIG.2

EP 0 604 309 A1

FIG.4

FIG.5

FIG.6

EP 0 604 309 A1

**Office européen des brevets**

**RAPPORT DE RECHERCHE EUROPEENNE**

Numero de la demande

EP 93 40 3130

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| X | EP-A-0 177 429 (MATRA)<br>* page 2, ligne 30 - page 3, ligne 27 *<br>* page 7, ligne 7 - page 8, ligne 23 *<br>* page 15, ligne 1 - page 16, ligne 10 *<br>--- | 1-11 | G06F13/16<br>G11C8/04 |
| X<br><br>A | EP-A-0 168 077 (N.V. PHILIPS' GLOEILAMPENFABRIEKEN)<br>* page 1, ligne 27 - page 2, ligne 29 *<br>* page 5, ligne 28 - page 7, ligne 7 *<br>* revendication 1; figure 1 *<br>--- | 1-6<br><br>7-11 | |
| X<br>A | EP-A-0 418 776 (FUJITSU LIMITED)<br>* colonne 2, ligne 26 - colonne 3, ligne 46 *<br>* colonne 4, ligne 44 - colonne 6, ligne 4 *<br>* colonne 6, ligne 46 - colonne 7, ligne 3 *<br>* figure 1 *<br>--- | 1-6<br>10,11 | |
| X<br>A | EP-A-0 211 385 (TOSHIBA K.K.)<br>* colonne 1, ligne 8 - ligne 40 *<br>* colonne 2, ligne 26 - colonne 3, ligne 10 *<br>* colonne 3, ligne 43 - colonne 5, ligne 10 *<br>* abrégé; figures 1-6 *<br>----- | 1-4<br>10,11 | **DOMAINES TECHNIQUES RECHERCHES (Int.Cl.5)**<br><br>G06F<br>G11C |

Le présent rapport a été établi pour toutes les revendications

| Lieu de la recherche | Date d'achèvement de la recherche | Examinateur |
|---|---|---|
| LA HAYE | 7 Avril 1994 | Nguyen Xuan Hiep, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C03)

14